(19) **Europäisches Patentamt / European Patent Office / Office européen des brevets**

(11) **EP 2 751 195 B1**

(12) # EUROPEAN PATENT SPECIFICATION

(45) Date of publication and mention
of the grant of the patent:
**18.11.2015 Bulletin 2015/47**

(51) Int Cl.:
***C08L 23/10*** *(2006.01)*      ***C08K 5/00*** *(2006.01)*

(21) Application number: **12766407.6**

(22) Date of filing: **18.09.2012**

(86) International application number:
**PCT/EP2012/068347**

(87) International publication number:
**WO 2013/041523 (28.03.2013 Gazette 2013/13)**

(54) **POLYPROPYLENE COMPOSITION WITH IMPROVED ADDITIVE RETENTION**

POLYPROPYLENZUSAMMENSETZUNG MIT VERBESSERTEM ZUSATZSTOFFRÜCKHALT

COMPOSITION DE POLYPROPYLÈNE AYANT UNE RÉTENTION D'ADDITIF AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2011 EP 11181790**

(43) Date of publication of application:
**09.07.2014 Bulletin 2014/28**

(73) Proprietor: **Total Research & Technology Feluy
7181 Seneffe (BE)**

(72) Inventor: **TERLINDEN, Geoffroy
B-1970 Wezembeek-Oppem (BE)**

(74) Representative: **Leyder, Francis
Total Research & Technology Feluy
Zone Industrielle C
7181 Seneffe (BE)**

(56) References cited:
**US-A1- 2002 182 426      US-A1- 2003 092 844**

Printed by Jouve, 75001 PARIS (FR)

## Description

### Field of the invention

The present invention relates to polypropylene compositions, which are characterized by improved additive retention, as well as to articles comprising such polypropylene compositions. The present invention is particularly useful for articles requiring specific surface properties over an extended period of time.

### The technical problem and the prior art

The vast majority of commercial polypropylene is either homopolymer of propylene or copolymer of propylene with other olefins, generally with other alpha-olefins. The nature of the monomers leads to polymers essentially consisting of carbon and hydrogen only, thus also resulting in specific properties of the polymers, such as for example a hydrophobic surface or chemical inertness to a wide range of chemicals.

Depending upon the final use of the polypropylene, its inherent properties may be more or less desired. In consequence, polymer producers and converters try to change the properties by the addition of additives into the polypropylene. Some of these additives, particularly the ones which are intended to modify the surface properties, are migrating additives, which after having been added into the polypropylene over time migrate to the surface.

A particular example of such additives are antistatic agents. Antistatic agents generally comprise a hydrophobic (non-polar) part and a hydrophilic (polar) part. After their incorporation into the polypropylene, antistatic agents need to migrate to the surface of the polypropylene in order to become effective, i.e. to render the hydrophobic surface of the polypropylene more hydrophilic and in consequence for example less susceptible to dust accumulation on the surface. This is of particular interest for durable goods, such as transport boxes and crates or garden furniture or toys to name only a few.

For durable goods to keep their appearance over an extended period of time it is normally necessary to incorporate high levels of antistatic agents. By doing so the time before the "reservoir" of antistatic agent in the polypropylene is depleted is increased.

However, high levels of antistatic agent in the polypropylene frequently lead to blooming, i.e. too much antistatic agent gathers on the polypropylene's surface and results in a matte ("non-glossy") appearance.

The present invention is therefore concerned with providing a polypropylene composition that does not have these disadvantages.

Hence, it is an object of the present invention to provide a polypropylene composition having good gloss despite the presence of migrating additives in said polypropylene composition.

Further, it is an object of the present invention to provide a polypropylene composition wherein the level of additive can be reduced while still giving the same effect or wherein the same level leads to an increased life time of the article comprising said polypropylene composition.

Additionally, it is an object of the present invention to provide an article having these characteristics.

### Brief description of the invention

Any of these objectives can be attained either individually or in any combination by the following polypropylene composition wherein the polypropylene has been produced with a metallocene-based polymerization catalyst.

In consequence, the present application discloses a polypropylene composition comprising

(i) x wt% of component (A), said component (A) being a polypropylene produced with a metallocene-based polymerization catalyst, wherein x is at least 50;
(ii) y wt% of component (B), said component (B) being an additive that migrates to the surface of said polypropylene composition, wherein y is at least 0.001 and at most 2.0; and
(iii) (100 - x - y) wt% of component (C), said component (C) being one or more thermoplastic polymers different from component (A),

with the provision that $x + y \leq 100$, and with wt% relative to the total weight of said polypropylene composition, wherein said polypropylene composition has a gloss at 20° of at least 75, determined on 1 mm thick plaques having been produced by injection molding and stored at 40°C $\pm$ 1°C for three days before measuring gloss at 20° in accordance with ASTM D 2457..

The present application also discloses articles consisting of said polypropylene composition and a process for the production of an article having improved additive retention, said process comprising the steps of

(a) providing a polypropylene composition as defined above; and

(b) transforming said polypropylene composition into an article by a process selected from the group consisting of injection molding, extrusion blow molding, extrusion-thermoforming, sheet extrusion, film extrusion, pipe extrusion, and injection stretch-blow molding.

Additionally, the present application discloses the use of a polypropylene composition according to claim 1 to reduce the migration rate of said component (B), characterized in that the difference in gloss of the 1 mm thick injection molded plaques measured three days following injection molding and 25 days following injection is at most 70 % of the difference in gloss of the 1 mm thick injection molded plaques stored at $40°C \pm 1°C$ measured three days following injection molding and 25 days following injection molding for the same polypropylene composition wherein for component (A) the polypropylene produced with a polymerization catalyst comprising a metallocene was substituted with a polypropylene produced with a Ziegler-Natta polymerization catalyst.

**Brief description of the drawing**

**Figure 1** shows the evolution of gloss at 20° with time obtained for compositions comprising a metallocene polypropylene as well as for comparative compositions comprising a Ziegler-Natta polypropylene.

**Figure 2** shows the migration, in the mold, of the additive in a metallocene polypropylene as well as for comparative composition comprising a Ziegler-Natta polypropylene.

**Detailed description of the invention**

Throughout the present application the terms "polypropylene" and "propylene polymer" may be used synonymously.

Throughout the present application, melt flow index, abbreviated as "MFI", of polypropylene and polypropylene compositions is determined according to ISO 1133, condition L, at 230°C and 2.16 kg.

In general terms the present application provides for a polypropylene composition comprising a component (A), a component (B) and a component (C) as defined below.

POLYPROPYLENE COMPOSITION

The present polypropylene composition comprises

(i) x wt% of a component (A), wherein x is at least 50;

(ii) y wt% of a component (B), wherein y is at least 0.001 and at most 2.0; and

(iii) (100 - x - y) wt% of a component (C).

with the provision that $x + y \leq 100$, and with wt% relative to the total weight of said polypropylene composition.

Preferably, for the present polypropylene composition x is at least 70, or 80 or 90, more preferably at least 95 or 97 or 98, even more preferably at least 98.5 or 98.6 or 98.7 or 98.8 or 98.9, and most preferably at least 99.0.

Preferably, for the present polypropylene composition y is at least 0.005, more preferably at least 0.01 or 0.02 or 0.03, even more preferably at least 0.04 or 0.06, still even more preferably at least 0.08 and most preferably at least 0.10.

Preferably, for the present polypropylene composition y is at most 1.5, more preferably at most 1.4 or 1.3, even more preferably at most 1.2 or 1.1, and most preferably at most 1.0.

Component (C) is comprised in the present polypropylene composition in such an amount that the combined weight percentages of components (A), (B) and (C) add up to 100 wt%

The present polypropylene composition is characterized by a gloss at 20° of at least 75. Said gloss is preferably at least 80, more preferably at least 85, and most preferably at least 90. Gloss is determined as indicated in the test methods.

The melt flow index of the present polypropylene composition is not particularly limited. It is, nevertheless, preferred that the melt flow index is at least 0.1 dg/min or 1.0 dg/min, more preferably at least 5 dg/min, and most preferably at least 10 dg/min. It is preferred that the melt flow index is at most 500 dg/min, more preferably at most 400 dg/min or 300 dg/min or 200 dg/min, even more preferably at most 150 dg/min, and most preferably at most 100 dg/min.

- COMPONENT (A)

Component (A) is a polypropylene produced with a metallocene-based polymerization catalyst ("metallocene polypropylene"). It is preferred that the polypropylene is a random copolymer of propylene and at least one comonomer, said comonomer being an alpha-olefin different from propylene.

With regards to the at least one comonomer, it is preferred that it is an alpha-olefin having from one to ten carbon atoms. More preferably, the alpha-olefin is selected from the group consisting of ethylene, butene-1, pentene-1, hexene-1, heptene-1, hexene-1 and 4-methyl-pentene-1. Even more preferably, the alpha-olefin is selected from the group consisting of ethylene, butene-1 and hexene-1. Most preferably, the alpha-olefin is ethylene. Hence, the most preferred random copolymer is a random copolymer of propylene and ethylene (C3-C2).

Said random copolymer comprises at least 0 wt%, preferably at least 0.5 wt%, more preferably at least 1.0 wt% or 1.1 wt%, even more preferably at least 1.2 wt% or 1.3 wt%, still even more preferably at least 1.4 wt%, and most preferably at least 1.5 wt% of the at least one comonomer, relative to the total weight of said random copolymer. In case the comonomer content is 0 wt%, the random copolymer may also be referred to as a propylene homopolymer.

Said random copolymer comprises at most 6.0 wt%, more preferably at most 5.0 wt%, even more preferably at most 4.5 wt%, and most preferably at most 4.0 wt% of the at least one comonomer, relative to the total weight of said random copolymer.

Preferably, the metallocene polypropylene used herein has a high degree of isotacticity, for which the content of mmmm pentads is a measure. Thus, preferably the content of mmmm pentads is at least 90 %, more preferably at least 92 %, even more preferably at least 94 % and most preferably at least 96 %. The content of mmmm pentads may be determined by $^{13}$C-NMR analysis as described in the test methods.

Further, the metallocene polypropylene used herein preferably has a content of 2,1-insertions of at most 1.5 %, more preferably of at most 1.3 %, even more preferably of at most 1.2 %, still even more preferably of at most 1.1 % and most preferably of at most 1.0 %. Preferably the content of 2,1-insertions is at least 0.1 %. The percentage of 2,1-insertions is given relative to the total number of propylene monomers in the polymeric chain and may be determined by $^{13}$C-NMR analysis as given in more detail in the test methods.

Preferably, the metallocene polypropylene used herein has a molecular weight distribution, defined as $M_w/M_n$, i.e. the ratio of weight average molecular weight $M_w$ over number average molecular weight $M_n$, of at most 4.0. Preferably, the metallocene polypropylene used herein has a molecular weight distribution, defined as $M_w/M_n$, of at most 3.5, more preferably of at most 3.0, and most preferably of at most 2.8. Preferably, the metallocene polypropylene used herein has a molecular weight distribution (MWD), defined as $M_w/M_n$, of at least 1.0, more preferably of at least 1.5 and most preferably of at least 2.0. Molecular weights can be determined by size exclusion chromatography (SEC), frequently also referred to as gel permeation chromatography (GPC), as described in the test methods.

The metallocene polypropylene used herein is obtained by polymerizing propylene and at least one comonomer with a metallocene-based polymerization catalyst. Preferably the metallocene-based polymerization catalyst comprises a bridged metallocene component, a support and an activating agent. Such metallocene-based polymerization catalysts are generally known in the art and need not be explained in detail.

The metallocene component can be described by the following general formula

$$(\mu\text{-}R^a)(R^b)(R^c)MX^1X^2 \qquad\qquad (I)$$

wherein $R^a$, $R^b$, $R^c$, M, $X^1$ and $X^2$ are as defined below.

$R^a$ is the bridge between $R^b$ and $R^c$, i.e. $R^a$ is chemically connected to $R^b$ and $R^c$, and is selected from the group consisting of -(CR$^1$R$^2$)$_p$-, -(SiR$^1$R$^2$)$_p$-, -(GeR$^1$R$^2$)$_p$-, - (NR$^1$)$_p$-, -(PR$^1$)$_p$-, -(N$^+$R$^1$R$^2$)$_p$- and -(P$^+$R$^1$R$^2$)$_p$-, and p is 1 or 2, and wherein $R^1$ and $R^2$ are each independently selected from the group consisting of hydrogen, $C_1$-$C_{10}$ alkyl, $C_5$-$C_8$ cycloalkyl, $C_6$-$C_{15}$ aryl, alkylaryl with $C_1$-$C_{10}$ alkyl and $C_6$-$C_{15}$ aryl, or any two neighboring R (i.e. two neighboring $R^1$, two neighboring $R^2$, or $R^1$ with a neighboring $R^2$) may form a cyclic saturated or non-saturated $C_4$-$C_{10}$ ring; each $R^1$ and $R^2$ may in turn be substituted in the same way. Preferably $R^a$ is -(CR$^1$R$^2$)$_p$- or - (SiR$^1$R$^2$)$_p$- with $R^1$, $R^2$ and p as defined above. Most preferably $R^a$ is -(SiR$^1$R$^2$)$_p$- with $R^1$, $R^2$ and p as defined above. Specific examples of $R^a$ include Me$_2$C, ethanediyl (-CH$_2$-CH$_2$-), Ph$_2$C and Me$_2$Si.

M is a metal selected from Ti, Zr and Hf, preferably it is Zr.

$X^1$ and $X^2$ are independently selected from the group consisting of halogen, hydrogen, $C_1$-$C_{10}$ alkyl, $C_6$-$C_{15}$ aryl, alkylaryl with $C_1$-$C_{10}$ alkyl and $C_6$-$C_{15}$ aryl. Preferably $X^1$ and $X^2$ are halogen or methyl.

$R^b$ and $R^c$ are selected independently from one another and comprise a cyclopentadienyl ring.

Preferred examples of halogen are Cl, Br, and I. Preferred examples of $C_1$-$C_{10}$ alkyl are methyl, ethyl, n-propyl, iso-propyl, n-butyl, iso-butyl, and tert-butyl. Preferred examples of $C_5$-$C_7$ cycloalkyl are cyclopentyl, cyclohexyl, cycloheptyl and cyclooctyl. Preferred examples of $C_6$-$C_{15}$ aryl are phenyl and indenyl. Preferred examples of alkylaryl with $C_1$-$C_{10}$ alkyl and $C_6$-$C_{15}$ aryl are benzyl (-$CH_2$-Ph), and -($CH_2$)$_2$-Ph.

Preferably, $R^b$ and $R^c$ may both be substituted cyclopentadienyl, or may be independently from one another unsubstituted or substituted indenyl or tetrahydroindenyl, or $R^b$ may be a substituted cyclopentadienyl and $R^c$ a substituted or unsubstituted fluorenyl. More preferably, $R^b$ and $R^c$ may both be the same and may be selected from the group consisting of substituted cyclopentadienyl, unsubstituted indenyl, substituted indenyl, unsubstituted tetrahydroindenyl and substituted tetrahydroindenyl. By "unsubstituted" is meant that all positions on $R^b$ resp. $R^c$, except for the one to which the bridge is attached, are occupied by hydrogen. By "substituted" is meant that, in addition to the position at which the bridge is attached, at least one other position on $R^b$ resp. $R^c$ is occupied by a substituent other than hydrogen, wherein each of the substituents may independently be selected from the group consisting of $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring substituents may form a cyclic saturated or non-saturated $C_4$-$C_{10}$ ring.

A substituted cyclopentadienyl may for example be represented by the general formula $C_5R^3R^4R^5R^6$. A substituted indenyl may for example be represented by the general formula $C_9R^7R^8R^9R^{10}R^{11}R^{12}R^{13}R^{14}$. A substituted tetrahydroindenyl may for example be represented by the general formula $C_9H_4R^{15}R^{16}R^{17}R^{18}$. A substituted fluorenyl may for example be represented by the general formula $C_{13}R^{19}R^{20}R^{21}R^{22}R^{23}R^{24}R^{25}R^{26}$. Each of the substituents $R^3$ to $R^{26}$ may independently be selected from the group consisting of hydrogen, $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring R may form a cyclic saturated or non-saturated $C_4$-$C_{10}$ ring; provided, however, that not all substituents simultaneously are hydrogen.

Preferred metallocene components are those having $C_2$-symmetry or those having $C_1$-symmetry. Most preferred are those having $C_2$-symmetry.

Particularly suitable metallocene components are those wherein $R^b$ and $R^c$ are the same and are substituted cyclopentadienyl, preferably wherein the cyclopentadienyl is substituted in the 2-position, the 3-position, or simultaneously the 2-position and the 3-position.

Particularly suitable metallocene components are also those wherein $R^b$ and $R^c$ are the same and are selected from the group consisting of unsubstituted indenyl, unsubstituted tetrahydroindenyl, substituted indenyl and substituted tetrahydroindenyl. Substituted indenyl is preferably substituted in the 2-position, the 3-position, the 4-position, the 5-position or any combination of these, more preferably in the 2-position, the 4-position or simultaneously in the 2-position and the 4-position. Substituted tetrahydroindenyl is preferably substituted in the 2-position, the 3-position, or simultaneously the 2-position and the 3-position.

Particularly suitable metallocene components may also be those wherein $R^b$ is a substituted cyclopentadienyl and $R^c$ is a substituted or unsubstituted fluorenyl. The substituted cyclopentadienyl is preferably substituted in the 2-position, the 3-position, the 5-position or simultaneously any combination of these, more preferably in the 3-position or the 5-position or both simultaneously, most preferably in the 3-position only, with a bulky substituent. Said bulky substituent may for example be -$CR^{27}R^{28}R^{29}$ or -$SiR^{27}R^{28}R^{29}$ with $R^{27}$, $R^{28}$ and $R^{29}$ independently selected from group consisting of $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring R may form a cyclic saturated or non-saturated $C_4$-$C_{10}$ ring. it is preferred that $R^{27}$, $R^{28}$ and $R^{29}$ are methyl.

Examples of particularly suitable metallocenes are:

dimethylsilanediyl-bis(2-methyl-cyclopentadienyl)zirconium dichloride,
dimethylsilanediyl-bis(3-methyl-cyclopentadienyl)zirconium dichloride,
dimethylsilanediyl-bis(3-tert-butyl-cyclopentadienyl)zirconium dichloride,
dimethylsilanediyl-bis(3-tert-butyl-5-methyl-cyclopentadienyl)zirconium dichloride,
dimethylsilanediyl-bis(2,4-dimethyl-cyclopentadienyl)zirconium dichloride,
dimethylsilanediyl-bis(indenyl)zirconium dichloride,
dimethylsilanediyl-bis(2-methyl-indenyl)zirconium dichloride,
dimethylsilanediyl-bis(3-methyl-indenyl)zirconium dichloride,
dimethylsilanediyl-bis(3-tert-butyl-indenyl)zirconium dichloride,
dimethylsilanediyl-bis(4,7-dimethyl-indenyl)zirconium dichloride,
dimethylsilanediyl-bis(tetrahydroindenyl)zirconium dichloride,
dimethylsilanediyl-bis(benzindenyl)zirconium dichloride,
dimethylsilanediyl-bis(3,3'-2-methyl-benzindenyl)zirconium dichloride,
dimethylsilanediyl-bis(4-phenyl-indenyl)zirconium dichloride,
dimethylsilanediyl-bis(2-methyl-4-phenyl-indenyl)zirconium dichloride,
ethanediyl-bis(indenyl)zirconium dichloride,
ethanediyl -bis(tetrahydroindenyl)zirconium dichloride,
isopropylidene-(3-tert-butyl-cyclopentadienyl)(fluorenyl) zirconium dichloride
isopropylidene-(3-tert-butyl-5-methyl-cyclopentadienyl)(fluorenyl) zirconium dichloride.

The metallocene may be supported according to any method known in the art. In the event it is supported, the support used in the present invention can be any organic or inorganic solid, particularly porous supports such as talc, inorganic oxides, and resinous support material such as polyolefin. Preferably, the support material is an inorganic oxide in its finely divided form.

The metallocene polypropylene used herein is produced by polymerizing propylene and at least one comonomer in presence of a metallocene-based polymerization catalyst to obtain the metallocene polypropylene. Preferably, the metallocene polypropylene used herein is a metallocene polypropylene homopolymer produced by polymerizing propylene in presence of a metallocene-based polymerization catalyst. The polymerization in presence of a metallocene-based polymerization catalyst can be carried out according to known techniques in one or more polymerization reactors at temperatures in the range from 20°C to 150°C. The metallocene polypropylene used herein is preferably produced by polymerization in liquid propylene at temperatures in the range from 20°C to 120°C. More preferred temperatures are in the range from 60°C to 100°C. The pressure can be atmospheric or higher. It is preferably between 25 and 50 bar. The molecular weight of the polymer chains, and in consequence the melt flow of the resulting metallocene polypropylene, may be controlled by the addition of hydrogen to the polymerization medium.

Preferably, the metallocene polypropylene is recovered from the one or more polymerization reactors without post-reactor treatment, such as thermal or chemical degradation (e.g. by using peroxides), to reduce its molecular weight and/or narrow the molecular weight distribution, as is often done for polypropylene produced with a Ziegler-Natta catalyst. An example for chemical degradation is visbreaking, wherein the polypropylene is reacted for example with an organic peroxide at elevated temperatures, for example in an extruder or pelletizing equipment.

The metallocene polypropylene may also comprise one or more antioxidants, one or more acid scavengers, one or more light stabilizers, one or more nucleating agents and any blend of these. The additives comprised in said metallocene polypropylene are non-migrating additives. A general overview of such additives is given in Plastics Additives Handbook, ed. H. Zweifel, 5th edition, 2001, Hanser Publishers.

- COMPONENT (B)

Component (B) is an additive that migrates, or in other words, has the tendency to migrate, to the surface of the present polypropylene composition, or rather to the surface of an article consisting of said polypropylene composition. For a general overview of additives it is referred to the already mentioned Plastics Additives Handbook, ed. H. Zweifel, 5th edition, 2001, Hanser Publishers.

Preferably, component (B) is selected from the group consisting of antioxidants, acid scavengers, light stabilizers, lubricants, nucleating agents, antistatic agents and any blend of these. Most preferably, component (B) is an antistatic agent of a blend of more than one antistatic agents.

Suitable antistatic agents for use in the present polypropylene composition can be selected from any of the antistatic agents known to the skilled person. It is, however, preferred that the antistatic agent be selected from the group consisting of fatty acid esters, ethoxylated alkylamines, diethanolamides, ethoxylated alcohols, and blends thereof.

Examples of fatty acid esters are esters of fatty acids with general formula $C_mH_{2m+1}COOH$, wherein $C_mH_{2m+1}$ is a, preferably linear, hydrocarbyl group (alkyl group) with m ranging from 1 to 35, preferably from 5 to 30, even more preferably from 10 to 25, and most preferably from 15 to 20. The most preferred fatty acid esters are glycerol monostearate, glycerol distearate and glycerol tristearate.

Examples of ethoxylated amines are those of general formula $C_mH_{2m+1}N(CH_2-CH_2-OH)_2$, wherein $C_mH_{2m+1}$ is an alkyl group with m ranging from 1 to 30.

Examples of diethanolamides are those of general formula $C_mH_{2m+1}-C(O)-N(CH_2-CH_2-OH)_2$, wherein $C_mH_{2m+1}$ is an alkyl group with m ranging from 1 to 30, preferably from 5 to 25 and most preferably from 10 to 20.

Examples of ethoxylated alcohols are those of general formula $H-(O-CH_2-CH_2)_n-C_mH_{2m+1}$, wherein $C_mH_{2m+1}$ is an alkyl group with m ranging from 1 to 30, preferably from 5 to 25 and most preferably from 10 to 20, and n is preferably from 1 to 15. The antistatic agent or the blend of more that one antistatic agents are preferably comprised in the metallocene polypropylene in an amount of at least 100 ppm, more preferably of at least 250 ppm, even more preferably of at least 500 ppm, even more preferably of at least 750 ppm, still even more preferably of at least 1000 ppm, and most preferably of at least 1250 ppm. The one or more antistatic agents are preferably comprised in the metallocene polypropylene in an amount of at most 20,000 ppm or 15,000 ppm or 10,000 ppm, more preferably of at most 9,000 ppm or 8,000 ppm, even more preferably of at most 7,000 ppm or 6,000 ppm and most preferably of at most 5,000 ppm. The content of antistatic agent is given in weight relative to the total weight of the metallocene polypropylene.

- COMPONENT (C)

Component (C) is a thermoplastic polymer or a blend of at least two thermoplastic polymers, with the provision that such thermoplastic polymer is different from component (A).

The one or more thermoplastic polymer can be selected from the group consisting of propylene homopolymers, random copolymers of propylene and at least one comonomer with the comonomer as defined above, heterophasic copolymers of propylene and at least one comonomer, ethylene homopolymers, copolymers of ethylene and at least one comonomer with the comonomer as defined above, under the provision that the one or more thermoplastic polymers is different from component (A).

By "different from component (A)" is meant that the thermoplastic polymer differs in at least one property from the metallocene polypropylene as defined above. Said property may for example be the respective composition, such as that the thermoplastic polymer has different comonomer(s), or the comonomer content; be produced with a different polymerization catalyst, such as for example a Ziegler-Natta polymerization catalyst; or a different melt flow index; or have a different tacticity, i.e. a different content of mmmm pentads and be for example a syndiotactic polypropylene. The thermoplastic polymer is preferably not a metallocene polypropylene homopolymer.

The thermoplastic polymer is preferred to have a melt flow index as defined above for the metallocene polypropylene.

The present polypropylene composition are used to produce articles by a transformation process selected from the group consisting of injection molding, extrusion blow molding, extrusion-thermoforming, sheet extrusion, film extrusion, pipe extrusion, and injection stretch-blow molding. Injection molding is, however, preferred. Hence, the present application also discloses a process, wherein a polypropylene composition as defined above is provided and transformed into an articles by a process selected from one of said transformation processes.

The present polypropylene composition may be used for household articles, storage boxes, crates, toys, caps and closures, packaging articles, cups, garden furniture, pipe, films, sheet, corrugated sheet, panels etc.

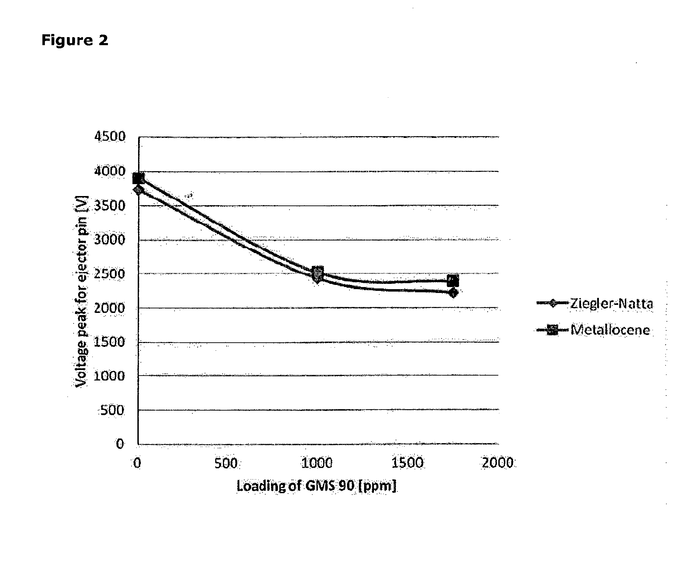

It has now very surprisingly been found that articles produced with the present polypropylene composition are characterized by improved additive retention, particularly as such effect is not observed with polypropylene compositions wherein the metallocene polypropylene is replaced by a polypropylene produced with a Ziegler-Natta polymerization catalyst. The finding is even more surprising as, in the mold, no relevant difference was observed between the migrations of the additive in the present polypropylene composition and in a polypropylene produced with a Ziegler-Natta polymerization catalyst **(Fig. 2).**

"Improved additive retention" can imply that additives, the migration of which to the surface of the article is not desired, are better retained within the polypropylene, and in consequence do not - or in reduced extent - lead to undesired effects. Alternatively, "improved additive retention" can also imply that additives, the migration of which to the surface of the article is desired, are released over an extended period of time. Such an effect is particularly desirable for example with antistatic agents. On the one hand it is desired that they accumulate on the surface in a concentration such that the desired effect, for example avoidance of dust build-up, is attained. On the other hand, the concentration should not be so high that blooming occurs. "Blooming" denotes the effect that too much antistatic agent arrives at the surface and gives the surface a matte and splotchy ("non-glossy") look.

Hence, the present application also relates to the use of a polypropylene composition as defined above to reduce the migration rate of component (B) as defined above, characterized in that the difference in gloss of the 1 mm thick injection molded plaques measured three days following injection molding and 25 days following injection is at most 70 % of the difference in gloss of the 1 mm thick injection molded plaques stored at 401°C ± 1°C measured three days following injection molding and 25 days following injection molding for the same polypropylene composition wherein for component (A) the polypropylene produced with a polymerization catalyst comprising a metallocene was substituted with a polypropylene produced with a Ziegler-Natta polymerization catalyst.

**Test methods**

Melt flow index (MFI) is determined according to ISO 1133, condition L, at 230°C and 2.16 kg.

Gloss is measured in accordance with ASTM D 2457 at an angle of 20°.

Molecular weights are determined by Size Exclusion Chromatography (SEC) at high temperature (145°C). A 10 mg polypropylene sample is dissolved at 160°C in 10 ml of trichlorobenzene (technical grade) for 1 hour. Analytical conditions for the GPCV 2000 from WATERS are :

- Injection volume: +/- 400 $\mu$l
- Automatic sample preparation and injector temperature: 160°C
- Column temperature: 145°C
- Detector temperature: 160°C
- Column set : 2 Shodex AT-806MS and 1 Styragel HT6E
- Flow rate: 1 ml/min
- Detector: Infrared detector (2800-3000 cm$^{-1}$)
- Calibration: Narrow standards of polystyrene (commercially available)

- Calculation for polypropylene: Based on Mark-Houwink relation ($\log_{10}(M_{PP}) = \log_{10}(M_{PS}) - 0.25323$); cut-off on the low molecular weight end at $M_{PP} = 1000$.

The molecular weight distribution (MWD) is then calculated as $M_w/M_n$.

Xylene solubles (XS), i.e. the xylene soluble fraction, are determined as follows: Between 4.5 and 5.5 g of propylene polymer are weighed into a flask and 300 ml xylene are added. The xylene is heated under stirring to reflux for 45 minutes. Stirring is continued for 15 minutes without heating. The flask is then placed in a thermostat bath set to 25°C +/- 1°C for 1 hour. The solution is filtered through Whatman n° 4 filter paper and 100 ml of solvent are collected. The solvent is then evaporated and the residue dried and weighed. The percentage of xylene solubles ("XS"), i.e. the amount of the xylene soluble fraction, is then calculated according to

$$XS \ (in \ wt\%) = (Weight \ of \ the \ residue \ / \ Initial \ total \ weight \ of \ PP) * 300$$

with all weights being in the same unit, such as for example in grams.

The $^{13}$C-NMR analysis is performed using a 400 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice the intensity of a signal is obtained from its integral, i.e. the corresponding area. The data is acquired using proton decoupling, 4000 scans per spectrum, a pulse repetition delay of 20 seconds and a spectral width of 26000 Hz. The sample is prepared by dissolving a sufficient amount of polymer in 1,2,4-trichlorobenzene (TCB, 99%, spectroscopic grade) at 130°C and occasional agitation to homogenize the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg of polymer are dissolved in 2.0 ml of TCB, followed by addition of 0.5 ml of $C_6D_6$ and 2 to 3 drops of HMDS.

Following data acquisition the chemical shifts are referenced to the signal of the internal standard HMDS, which is assigned a value of 2.03 ppm.

The isotacticity is determined by $^{13}$C-NMR analysis on the total polymer. In the spectral region of the methyl groups the signals corresponding to the pentads mmmm, mmmr, mmrr and mrrm are assigned using published data, for example A. Razavi, Macromol. Symp., vol. 89, pages 345-367. Only the pentads mmmm, mmmr, mmrr and mrrm are taken into consideration due to the weak intensity of the signals corresponding to the remaining pentads. For the signal relating to the mmrr pentad a correction is performed for its overlap with a methyl signal related to 2,1-insertions. The percentage of mmmm pentads is then calculated according to

$$\% \ mmmm = AREA_{mmmm} \ / \ (AREA_{mmmm} + AREA_{mmmr} + AREA_{mmrr} + AREA_{mrrm}) \bullet 100$$

Determination of the percentage of 2,1-insertions for a metallocene propylene homopolymer: The signals corresponding to the 2,1-insertions are identified with the aid of published data, for example H.N. Cheng, J. Ewen, Makromol. Chem., vol. 190 (1989), pages 1931-1940. A first area, AREA1, is defined as the average area of the signals corresponding to 2,1-insertions. A second area, AREA2, is defined as the average area of the signals corresponding to 1,2-insertions. The assignment of the signals relating to the 1,2-insertions is well known to the skilled person and need not be explained further. The percentage of 2,1-insertions is calculated according to

$$2,1\text{-insertions} \ (in \ \%) = AREA1 \ / \ (AREA1 + AREA2) \bullet 100$$

with the percentage in 2,1-insertions being given as the molar percentage of 2,1-inserted propylene with respect to total propylene.

The determination of the percentage of 2,1-insertions for a metallocene random copolymer of propylene and ethylene is determined by two contributions:

(i) the percentage of 2,1-insertions as defined above for the propylene homopolymer, and
(ii) the percentage of 2,1-insertions, wherein the 2,1-inserted propylene neighbors an ethylene,

thus the total percentage of 2,1-insertions corresponds to the sum of these two contributions. The assignments of the signal for case (ii) can be done either by using reference spectra or by referring to the published literature.

**Examples**

The advantages of the present invention are illustrated using the polypropylene compositions as indicated in Table 1.

Table 1

| | Component (A) [wt%] | Component (A) [wt%] | Component (B) [wt%] |
|---|---|---|---|
| Type | PP1 | PP2 | GMS90 |
| Example 1 | 99.900 | | 0.100 |
| Example 2 | 99.825 | | 0.175 |
| Comparative example 1 | | 99.900 | 0.100 |
| Comparative example 2 | 2 99.825 | 99.825 | 0.175 |

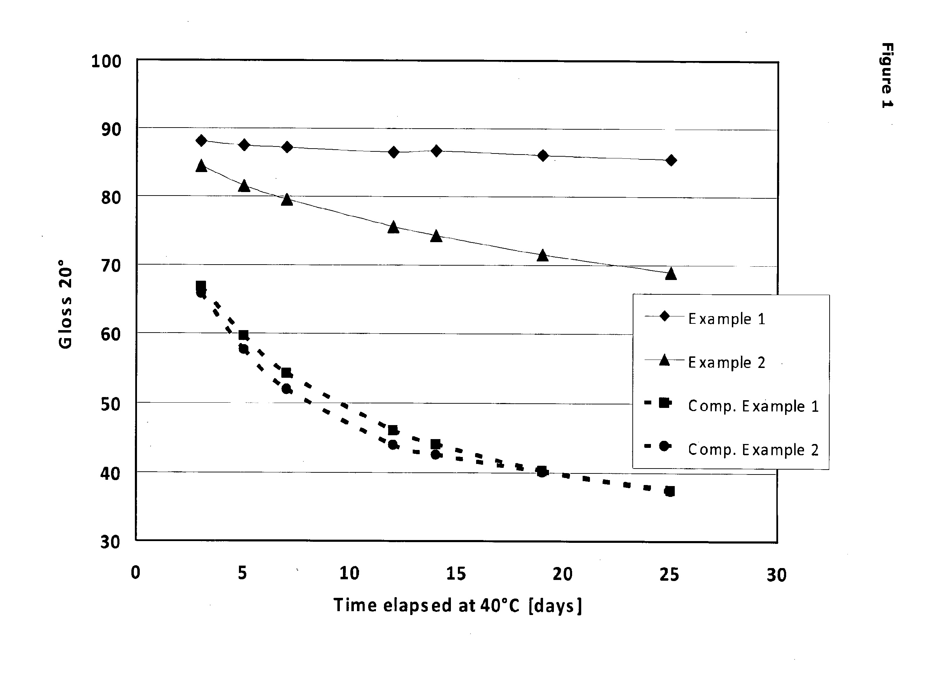

PP1 is a polypropylene produced with a metallocene-based polymerization catalysts, wherein the metallocene is a supported bridged (bis-disubstituted-indenyl) zirconocene. PP1 is a C3-C2 copolymer having a melt flow index of 110 dg/min and an ethylene content of 2 wt%.
PP2 is a polypropylene produced with a Ziegler-Natta polymerization catalyst. PP2 is a C3-C2 copolymer having a melt flow index of 80 dg/min, and an ethylene content of 3.5 wt%.
GMS90 is a commercially available antistatic agent with a content of glycol monostearate of 90 wt%.
Blooming, or migration of the antistatic agent to the surface of an article consisting of the polypropylene compositions of Examples 1 and 2 as well as Comparative Examples 1 and 2 was checked using gloss at 20° as an indicator. Gloss was determined on 1 mm thick plaques, which were injection molded on a 60 ton Netstal injection molding machine with a barrel temperature of 230°C.
The results of the gloss measurements are shown in Figure 1.
Figure 2 shows the migration, in the mold of the antistatic agent GMS90 in a Ziegler Natta polypropylene and in a metallocene polypropylene. In the mold, no relevant difference was observed between the migration of the GMS90. However, in the longer term, significant differences were observed as GMS 90 is migrating much faster in the Ziegler Natta polypropylene than in the metallocene polypropylene (Figure 1).

**Claims**

1. Polypropylene composition comprising

   (i) x wt% of component (A), said component (A) being a random copolymer of propylene and ethylene produced with a metallocene-based polymerization catalyst and having a molecular weight distribution, defined as $M_w/M_n$, of at most 4.0, wherein x is at least 70;
   (ii) y wt% of component (B), said component (B) being an additive that migrates to the surface of said polypropylene composition, wherein y is at least 0.001 and at most 2.0; and
   (iii) (100 - x - y) wt% of component (C), said component (C) being one or more thermoplastic polymers different from component (A) and wherein said thermoplastic polymer Is not a metallocene polypropylene homopolymer,

   with the provision that $x + y \leq 100$, and with wt% relative to the total weight of said polypropylene composition, wherein said polypropylene composition has a gloss at 20° of at least 75, determined on 1 mm thick plaques having been produced by injection molding and stored at 40°C $\pm$ 1°C for three days before measuring gloss at 20° In accordance with ASTM D 2457.

2. Polypropylene composition according to claim 1, wherein component (A) has a content of mmmm pentads of at least 90 %.

3. Polypropylene composition according to any of the preceding claims, wherein component (A) has a content of 2,1-insertions of at least 0.1 % and of at most 1.5 %.

4. Polypropylene composition according to any of the preceding claims, wherein component (B) is an antistatic agent.

5. Article consisting of the polypropylene composition of any of claims 1 to 4.

6. Process for the production of an article having improved additive retention, said process comprising the steps of

(a) providing a polypropylene composition as defined in any of claims 1 to 5; and
(b) transforming said polypropylene composition into an article by a process selected from the group consisting of injection molding, extrusion blow molding, extrusion-thermoforming, sheet extrusion, film extrusion, pipe extrusion, and injection stretch-blow molding.

7. Use of a polypropylene composition according to claim 1 to reduce the migration rate of said component (B), **characterized in that** the difference In gloss of the 1 mm thick injection molded plaques measured three days following injection molding and 25 days following injection is at most 70 % of the difference in gloss of the 1 mm thick injection molded plaques stored at 40°C $\pm$ 1°C measured three days following injection molding and 25 days following Injection molding for the same polypropylene composition wherein for component (A) the polypropylene produced with a polymerization catalyst comprising a metallocene was substituted with a polypropylene produced with a Zlegler-Natta polymerization catalyst.

8. Use according to claim 7, wherein the polypropylene composition is as defined further in any of claims 2 to 4.


**Patentansprüche**

1. Polypropylenzusammensetzung, die umfasst:

(i) x Gew.-% einer Komponente (A), wobei die Komponente (A) ein statistisches Copolymer von Propylen und Ethylen ist, das mit einem metallocenbasierten Polymerisationskatalysator produziert wurde und eine Molekulargewichtsverteilung von höchstens 4,0 aufweist, die als $M_w/M_n$ definiert ist, wobei x zumindest 70 ist;
(ii) y Gew.-% einer Komponente (B), wobei die Komponente (B) ein Zusatzstoff ist, der auf die Oberfläche der Polypropylenzusammensetzung wandert, wobei y zumindest 0,001 und höchstens 2,0 ist; und
(iii) (100 - x - y) Gew.-% einer Komponente (C), wobei die Komponente (C) ein oder mehrere thermoplastische Polymere ist, die sich von Komponente (A) unterscheiden, und wobei das thermoplastische Polymer kein Metallocenpolypropylenhomopolymer ist,

mit der Maßgabe, dass x + y $\leq$ 100, und wobei sich die Gew.-% auf das Gesamtgewicht der Polypropylenzusammensetzung beziehen,
wobei die Polypropylenzusammensetzung bei 20° einen Glanz von zumindest 75 hat, wie auf 1 mm dicken Plaques gemessen, die durch Spritzguss produziert und bei 40 °C $\pm$ 1 °C für drei Tage gelagert worden waren, bevor der Glanz bei 20° gemäß ASTM D 2457 gemessen wurde.

2. Polypropylenzusammensetzung nach Anspruch 1, wobei die Komponente (A) einen Gehalt von mmmm Pentaden von zumindest 90 % aufweist.

3. Polypropylenzusammensetzung nach einem der vorstehenden Ansprüche, wobei die Komponente (A) einen Gehalt von 2,1-Insertionen von zumindest 0,1 % und höchstens 1,5 % aufweist.

4. Polypropylenzusammensetzung nach einem der vorstehenden Ansprüche, wobei die Komponente (B) ein antistatisches Mittel ist.

5. Gegenstand, der aus der Polypropylenzusammensetzung nach einem der Ansprüche 1 bis 4 besteht.

6. Verfahren zur Produktion eines Gegenstands mit verbesserter Zusatzstoffretention, wobei das Verfahren die Schritte umfasst:

(a) Bereitstellen einer Polypropylenzusammensetzung nach einem der Ansprüche 1 bis 5; und
(b) Umwandeln der Polypropylenzusammensetzung in einen Gegenstand mithilfe eines Verfahrens, das aus der Gruppe ausgewählt ist, bestehend aus Spritzguss, Extrusionsblasformung, Extrusionsthermoformung, Plattenextrusion, Folienextrusion, Rohrextrusion und Spritzstreckblasformung.

7. Verwendung einer Polypropylenzusammensetzung nach Anspruch 1 zur Verringerung der Wanderrate der Komponente (B), **dadurch gekennzeichnet, dass** der Glanzunterschied der 1 mm dicken spritzgegossenen Plaques, wie drei Tage nach Spritzguss und 25 Tage nach Spritzen gemessen, höchstens 70 % des Glanzunterschieds der 1 mm dicken spritzgegossenen Plaques ist, die bei 40 °C $\pm$ 1 °C gelagert wurden, wie drei Tage nach Spritzguss und 25 Tage nach Spritzguss für die gleiche Polypropylenzusammensetzung gemessen, wobei das Polypropylen in Bezug auf Komponente (A), das mit einem Polymerisationskatalysator produziert wurde, der ein Metallocen aufweist, durch ein Polypropylen substituiert wurde, das mit einem Ziegler-Natta-Polymerisationskatalysator produziert worden war.

8. Verwendung nach Anspruch 7, wobei die Polypropylenzusammensetzung wie in einem der Ansprüche 2 bis 4 näher definiert ist.

**Revendications**

1. Composition de polypropylène comprenant

   (i) x % en poids de composant (A), ledit composant (A) étant un copolymère statistique de propylène et d'éthylène produit avec un catalyseur de polymérisation à base de métallocène et ayant une distribution de poids moléculaire, définie par $M_w/M_n$, d'au plus 4,0, où x est au moins 70 ;
   (ii) y % en poids de composant (B), ledit composant (B) étant un additif qui migre à la surface de ladite composition de polypropylène, où y est au moins 0,001 et au plus 2,0 ; et
   (iii) (100 - x - y) % en poids de composant (C), ledit composant (C) étant un ou plusieurs polymères thermoplastiques différents du composant (A) et où ledit polymère thermoplastique n'est pas un homopolymère de polypropylène de métallocène,

   à condition que x + y $\leq$ 100, et le % en poids étant par rapport au poids total de ladite composition de polypropylène, **caractérisée en ce que** ladite composition de polypropylène a un brillant à 20° d'au moins 75, déterminé sur des plaques de 1 mm d'épaisseur ayant été produites par moulage par injection et conservées à 40 °C $\pm$ 1 °C pendant trois jours avant de mesurer le brillant à 20° selon ASTM D 2457.

2. Composition de polypropylène selon la revendication 1, dans laquelle le composant (A) a une teneur de pentads mmmm d'au moins 90 %.

3. Composition de polypropylène selon l'une quelconque des revendications précédentes, dans laquelle le composant (A) a une teneur de 2,1-insertions d'au moins 0,1 % et d'au plus 1,5 %.

4. Composition de polypropylène selon l'une quelconque des revendications précédentes, dans laquelle le composant (B) est un agent antistatique.

5. Article constitué de la composition de polypropylène de l'une quelconque des revendications 1 à 4.

6. Procédé de production d'un article ayant une rétention d'additif améliorée, ledit procédé comprenant les étapes de

   (a) fourniture d'une composition de polypropylène telle que définie dans l'une quelconque des revendications 1 à 5 ; et
   (b) transformation de ladite composition de polypropylène en article par un procédé choisi dans le groupe constitué du moulage par injection, du moulage par extrusion-soufflage, extrusion-thermoformage, extrusion de feuille, extrusion de film, extrusion de tuyau et moulage par injection-soufflage avec étirage.

7. Utilisation d'une composition de polypropylène selon la revendication 1 pour réduire le taux de migration dudit composant (B), **caractérisée en ce que** la différence de brillant des plaques moulées par injection de 1 mm d'épaisseur mesuré trois jours après le moulage par injection et 25 jours après l'injection est au plus 70 % de la différence de brillant des plaques moulées par injection de 1 mm d'épaisseur conservées à 40 °C $\pm$ 1 °C mesuré trois jours après le moulage par injection et 25 jours après le moulage par injection pour la même composition de polypropylène où, pour le composant (A), le polypropylène produit avec un catalyseur de polymérisation comprenant un métallocène est substitué par un polypropylène produit avec un catalyseur de polymérisation de Ziegler-Natta.

8.  Utilisation selon la revendication 7, **caractérisée en ce que** la composition de polypropylène est telle que définie plus avant dans l'une quelconque des revendications 2 à 4.

**Figure 1**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Plastics Additives Handbook. Hanser Publishers, 2001
- **A. RAZAVI.** *Macromol. Symp.,* vol. 89, 345-367
- **H.N. CHENG.** *J. Ewen, Makromol. Chem.,* 1989, vol. 190, 1931-1940